# EUROPÄISCHE PATENTSCHRIFT

(11) **EP 4 184 202 B1**
(45) Veröffentlichungstag und Bekanntmachung des Hinweises auf die Patenterteilung: **10.07.2024**
(21) Anmeldenummer: 22203331.8
(22) Anmeldetag: 24.10.2022
(51) Int. Cl.: G01S 7/481, G01S 7/497, G01S 17/42

(54) **OPTOELEKTRONISCHER SENSOR**
OPTOELECTRONIC SENSOR
CAPTEUR OPTOÉLECTRONIQUE

(30) Priorität: 19.11.2021 DE 102021130334
(43) Veröffentlichungstag der Anmeldung: 24.05.2023
(73) Patentinhaber: SICK AG, 79183 Waldkirch (DE)
(72) Erfinder: Menzel, Christoph, Denzlingen (DE); Baldischweiler, Boris, Gundelfingen (DE)

(56) Entgegenhaltungen:
- EP-A1- 2 787 323
- US-A1- 2006 098 258
- US-A1- 2020 174 101

## Beschreibung

Die Erfindung betrifft einen optoelektronischen Sensor zur Erfassung eines Objekts in einem Überwachungsbereich nach dem Oberbegriff von Anspruch 1.

Viele optoelektronische Sensoren arbeiten nach dem Tastprinzip, bei dem ein Lichtstrahl in den Überwachungsbereich ausgesandt und der von einem Objekt zurückgeworfene Lichtstrahl wieder empfangen wird, um dann das Empfangssignal elektronisch auszuwerten, beispielsweise für eine Abstandsmessung. Dabei wird oft die Lichtlaufzeit mit einem bekannten Phasen- oder Puls-verfahren gemessen, um den Abstand eines angetasteten Objekts zu bestimmen. Optoelektronische Sensoren, die dieses Verfahren verwenden, werden häufig als Lichttaster, TOF (Time-of-Flight) Sensoren oder LIDAR (Light Detection And Ranging) Sensoren bezeichnet. Um den Messbereich zu erweitern, kann der Lichtstrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandsinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen.

Optoelektronische Sensoren der eingangs genannten Art können mit sichtbarem Licht, aber auch mit Licht im infraroten Wellenlängenbereich arbeiten. Die Verwendung infraroten Lichts hat den Vorteil, dass die Messung nicht als störend wahrgenommen wird. Zudem sind Lichtquellen, die infrarotes Licht emittieren, beispielsweise Oberflächenemitter Laser (vertical-cavity surface-emitting laser (VCSEL)), in kleineren Baugrößen verfügbar als Laserdioden, die sichtbares Licht emittieren. Ein Sensor kann also entsprechend kleiner gebaut werden.

Ein infrarotes Lichtsignal hat jedoch den Nachteil, dass der Detektionsbereich, insbesondere der konkrete Ort der Abstandsmessung auf der jeweiligen Oberfläche, mit dem menschlichen Auge ohne zusätzliche Hilfsmittel nicht erkannt werden kann, was insbesondere die Montage und Justierung des Sensors erschwert.

Im Stand der Technik wird daher dem infraroten Messstrahl ein sichtbarer sogenannter Pilot- oder Zielstrahl überlagert, üblicherweise mit einem dichroitischen Spiegel, wie beispielsweise in der US 2004 0070745 A1 beschrieben. Derartige Systeme sind jedoch verhältnismäßig groß, zudem ist die Justage von Messstrahl und Pilotstrahl aufwändig und anfällig für Dejustagen.

Aus der US 2006 / 0 098 258 A1 ist ein System und Verfahren zum Kombinieren einer vorbestimmten Anzahl von Laserstrahlen bekannt. Das System umfasst eine Kollimationslinse zum Empfangen und Kollimieren der Laserstrahlen und eine holographische Vorrichtung, die so positioniert ist, dass sie Strahlen von der Kollimationslinse empfängt und Strahlen ausgibt, die gemeinsam ausgerichtet sind. Die ausgegebenen Strahlen verlaufen parallel, jedoch nicht koaxial.

Die US 2020 / 0 174 101 A1 bezieht sich auf ein Gerät zur Erfassung elektromagnetischer Wellen, wobei das Gerät einen Strahlteiler aufweist, der so beschaffen ist, dass sich elektromagnetische Wellen, die auf den Strahlteiler treffen, in einer ersten Richtung und in einer zweiten Richtung ausbreiten. Der Strahlteiler kann einen Teil der einfallenden elektromagnetischen Wellen in der ersten Richtung transmittieren und einen anderen Teil der elektromagnetischen Wellen in der zweiten Richtung reflektieren. Der Strahlteiler kann auch einen Teil der einfallenden elektromagnetischen Wellen in die erste Richtung brechen und einen anderen Teil der elektromagnetischen Wellen in die zweite Richtung brechen. Der Strahlteiler kann beispielsweise als Einwegspiegel, dichroitischer Spiegel, Langpassspiegel, Kurzpassspiegel, Metaoberfläche, Ablenkelement, Prisma oder dergleichen ausgeführt sein.

Die EP 2 787 323 A1 zeigt ein Vermessungsgerät mit einem elektrooptischen Distanzmesser (EDM) und einer automatischen Zielsuchfunktion. Für die Distanzmessung und die automatische Zielsuchfunktion sind eine EDM-Laserquelle und eine Feinanziel-Lichtquelle vorgesehen, wobei die EDM-Laserstrahlen und die Feinanziel-Strahlen anhand eines Strahlkombinierers, beispielsweise einer Strahlteilerfläche mit dichroitischer Beschichtung, vereinigt werden. Die EDM-Laserquelle kann EDM-Laserstrahlen im visuellen Bereich - etwa mit einer Wellenlänge von 630 nm - emittieren, so dass ein Messfleck am Zielobjekt sichtbar ist.

Ausgehend von diesem Stand der Technik ist es Aufgabe der Erfindung, einen verbesserten optoelektronischen Sensor bereitzustellen, der eine kompakte und robuste Bauweise aufweist,

Diese Aufgabe wird gelöst durch einen optoelektronischen Sensor mit den Merkmalen des Anspruchs 1.

Der erfindungsgemäße optoelektronische Sensor weist wenigstens eine Messlichtquelle zum Aussenden von wenigstens einem Messlichtstrahl im infraroten Wellenlängenbereich auf. Lichtstrahlen sind dabei nicht als Strahlen im Sinne der Strahlenoptik innerhalb eines größeren Lichtbündels zu verstehen, sondern als Lichtbündel, die im Überwachungsbereich beim Auftreffen auf ein Objekt entsprechende Lichtflecken erzeugen. Ein zugehöriger Lichtempfänger ist in der Lage aus reflektierten oder remittierten Messlichtstrahlen Empfangssignale zu erzeugen.

Eine Steuer- und Auswerteeinheit steuert die Lichtquellen und den Lichtempfänger und kann die Empfangssignale des Lichtempfängers auswerten, um Informationen über das Objekt, wie beispielsweise einen Abstand zum Sensor, zu gewinnen.

Zur Ausrichtung des für das menschliche Auge unsichtbaren, infraroten Messlichtstrahls ist wenigstens ein von einer Pilotlichtquelle im sichtbaren Wellenlängenbereich ausgesendeter Pilotlichtstrahl vorgesehen, sowie ein optisches Element zum koaxialen Überlagern von Messlichtstrahl und Pilotlichtstrahl, so dass diese koaxial entlang einer optischen Achse des optoelektronischen Sensors in den Überwachungsbereich projiziert werden und dort im Wesentlichen überlappende Lichtflecken erzeugen.

Die Erfindung geht von dem Grundgedanken aus, dass das optische Element zum koaxialen Überlagern des Messlichtstrahls und des Pilotlichtstrahls wenigstens eine erste optische Metaoberfläche aufweist. Dies hat den Vorteil, dass ein verbesserter Sensoraufbau mit geringerem Platzbedarf und robusterer Optik realisiert werden kann.

Als Metaoberflächen im Sinne dieser Anmeldung sind optisch wirksame Schichten zu verstehen, die Strukturen mit Strukturgrößen kleiner als die Wellenlängen des Messlichtstrahls und typischerweise ein binäres Höhenprofil aufweisen. Derartige Flächen sind aus der Fachliteratur bekannt (z.B.: Flat optics with designer metasurfaces, Nature Mater 13, 139-150 (2014). DOI: 10.1038/NMAT3839) und können durch geeignete Wahl der Strukturen Eigenschaften der Messlichtbeziehungsweise Pilotlichtstrahlen wie Phase, Amplitude und damit die Ausbreitungsrichtung sowie die Polarisation durch Aufprägen eines Phasenprofils definiert verändern, insbesondere abhängig von der Wellenläge der Lichtstrahlen. Metaoberflächen werden auch als "Flache Optiken" bezeichnet, da Ihr Platzbedarf in Strahlrichtung deutlich geringer ist als der konventioneller refraktiver Optiken.

Die erste optische Metaoberfläche ist zum koaxialen Überlagern von Messlicht- und Pilotlichtstrahl ausgebildet. Ein dichroitischer Spiegel kann somit entfallen. Der Messlichtstrahl kann dabei unter einem ersten Winkel und der Pilotlichtstrahl unter einem zweiten Winkel in Bezug auf die optische Achse des Sensors, entlang derer Messlicht- und Pilotlichtstrahl in den Überwachungsbereich projiziert werden, auf die optische Metaoberfläche auftreffen, wobei sich Beträge und/oder Richtungen des ersten Winkels und des zweiten Winkels unterscheiden können. Die optischen Achsen, entlang denen der Messlicht- beziehungsweise der Pilotlichtstrahl zur optischen Metaoberfläche propagieren, können sich bevorzugt an der optischen Metaoberfläche schneiden. Die optische Metaoberfläche ist derart ausgebildet, dass der Messlicht- beziehungsweise Pilotlichtstrahl durch Aufprägen von wellenlängenabhängigen, im Wesentlichen keilförmigen Phasenprofilen unterschiedlich stark von der optischen Metaoberfläche abgelenkt, koaxial überlagert und entlang der optischen Achse des Sensors in den Überwachungsbereich projiziert wird.

Eine zweite optische Metaoberfläche ist dazu ausgebildet, einen Öffnungswinkel des Messlichtstrahls durch Aufprägen eines im Wesentlichen parabolischen Phasenprofils einzustellen. Dadurch kann eine üblicherweise dazu verwendete, der Messlichtquelle nachgeordnete refraktive Linse entfallen und somit Bauraum gespart werden. Der Messlichtstrahl kann durch die zweite optische Metaoberfläche insbesondere kollimiert werden, so dass ein paralleles Messlichtstrahlbündel erzeugt wird.

Eine dritte optische Metaoberfläche ist dazu ausgebildet, einen Öffnungswinkel des Pilotlichtstrahls durch Aufprägen eines im Wesentlichen parabolischen Phasenprofils einzustellen. Dadurch kann eine üblicherweise dazu verwendete, der Pilotlichtquelle in Strahlrichtung nachgeordnete refraktive Linse entfallen und somit Bauraum gespart werden. Der Pilotlichtstrahl kann durch die dritte optische Metaoberfläche insbesondere kollimiert werden, so dass ein paralleles Pilotlichtstrahlbündel erzeugt wird.

In einer Weiterbildung der vorherigen Ausführungsform kann die erste optische Metaoberfläche zusätzlich dazu ausgebildet sein, einen Öffnungswinkel des Messlicht- und des Pilotlichtstrahls durch Aufprägen eines wellenlängenabhängigen, im Wesentlichen parabolischen Phasenprofils einzustellen, vorzugsweise zu kollimieren. Damit können zusätzliche optische Elemente wie refraktive Linsen oder weitere optische Metaoberflächen zur Einstellung eines Öffnungswinkels des Messlicht- und/oder Pilotlichtstrahls entfallen.

In den verschiedenen Ausführungsformen kann der Pilotlichtquelle in Strahlrichtung ein optisches Strahlformungselement zur Änderung einer Form Strahlquerschnitts des Pilotlichtstrahls nachgeordnet sein. Das optische Strahlformungselement kann beispielsweise derart ausgebildet sein, dass Pilotlichtstrahlen beim Auftreffen auf ein Objekt im Überwachungsbereich kreuzförmige Lichtflecken erzeugen. Durch eine entsprechende Lichtfleckform kann die Ausrichtung des Sensors weiter vereinfacht werden. Das optische Strahlformungselement kann als diffraktives optisches Element oder als weitere Metaoberfläche ausgebildet sein. Die Strahlformung kann aber auch durch eine entsprechende Ausbildung der ersten Metaoberfläche zur Vereinigung des Messlicht- und Pilotlichtstrahls erfolgen.

Die Messlichtquelle und die Pilotlichtquelle können auf einer gemeinsamen Leiterplatte angeordnet sein. Sie können derart ausgerichtet sein, dass sich die optischen Achsen, entlang denen der Messlicht- beziehungsweise der Pilotlichtstrahl von den Lichtquellen emittiert werden, einen Winkel zueinander aufweisen und sich an dem optischen Element zum Überlagern von Messlichtstrahl und Pilotlichtstrahl schneiden. Die Lichtquellen können aber auch so ausgerichtet sein, dass die die optischen Achsen, entlang denen der Messlicht- beziehungsweise der Pilotlichtstrahl von den Lichtquellen emittiert wird, parallel verlaufen, wobei dann der Messlichtquelle und/oder der Pilotlichtquelle in Lichtstrahlrichtung ein optisches Element zum Umlenken des Messlichtstrahls und/oder des Pilotlichtstrahls nachgeordnet ist, welches derart ausgebildet ist, dass sich die optischen Achsen, entlang denen der Messlicht- beziehungsweise der Pilotlichtstrahl zum optischen Element zum Überlagern von Messlichtstrahl und Pilotlichtstrahl propagieren, an diesem schneiden.

Die Pilotlichtquelle kann wenigstens einen Pilotlichtstrahl mit einer an die Lichtempfindlichkeit des menschlichen Auges angepasste Wellenlänge emittieren. Beispielsweise wird für das menschliche Auge grünes Licht mit einer Wellenlänge von 550 nm 31-mal heller empfunden als rotes Licht mit einer Wellenlänge von 670 nm. Bei Verwendung von grünem Licht kann daher eine Pilotlichtquelle mit geringerer Leistung verwendet werden.

Dem Lichtempfänger kann eine Empfangsoptik zur Fokussierung von reflektierten oder remittierten Messlichtstrahlen auf den Lichtempfänger vorgeordnet sein. Die Empfangsoptik kann als Metaoberfläche ausgeführt und derart ausgebildet sein, dass nur reflektierte oder remittierte Messlichtstrahlen auf den Sensor abgebildet werden und Lichtstrahlen aus anderen Wellenlängenbereichen vom Lichtempfänger weggelenkt werden, beispielsweise eine Strahlfalle. Die Empfangsoptik wirkt dann ähnlich wie ein optisches Filter.

Dem Lichtempfänger kann alternativ oder zusätzlich ein optisches Filter zur Unterdrückung von Störlicht, insbesondere von reflektierten oder remittierten Pilotlichtstrahlen vorgeordnet sein. Das optische Filter kann ebenfalls als Metaoberfläche ausgebildet sein.

Die Steuer- und Auswerteeinheit des Sensors kann dazu eingerichtet sein, verschiedene Betriebsmodi des Sensors bereit zu stellen. Ein Betriebsmodus kann beispielsweise ein Justagemodus sein, in dem Messlichtstrahl und Pilotlichtstrahl gleichzeitig aktiviert sind. Ein weiterer Betriebsmodus kann ein Messmodus sein, in dem der Pilotlichtstrahl deaktiviert ist, so dass durch den Pilotlichtstrahl erzeugtes Störlicht für den Lichtempfänger reduziert wird.

Gemäß einer Weiterbildung ist der optoelektronische Sensor dazu ausgebildet, den Abstand der jeweiligen Oberfläche zum Sensor aus einer Laufzeit eines pulsförmigen Lichtsignals zur jeweiligen Oberfläche und zurück oder aus der Phasenverschiebung eines von dem Sensor ausgesandten modulierten Lichtsignales zu dem an der jeweiligen Oberfläche reflektierten Lichtsignal zu ermitteln. Der optoelektronische Sensor kann also insbesondere nach dem Time-of-Flight-Prinzip (ToF) funktionieren.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung eines optoelektronischen Sensors;
- Fig. 2: eine schematische Darstellung einer alternativen Ausführungsform eines optoelektronischen Sensors;
- Fig. 3: eine schematische Darstellung einer Ausführungsform eines erfindungsgemäßen optoelektronischen Sensors;
- Fig. 4: eine schematische Darstellung der Funktion einer optischen Metaoberfläche zum koaxialen Überlagern von Messlichtstrahl und Pilotlichtstrahl;
- Fig. 5: eine schematische Darstellung einer weiteren Ausführungsform eines erfindungsgemäßen optoelektronischen Sensors;
- Fig. 6: beispielhafte Lichtflecken von Messlichtstrahlen und Pilotlichtstrahlen beim Auftreffen auf ein Objekt im Überwachungsbereich.

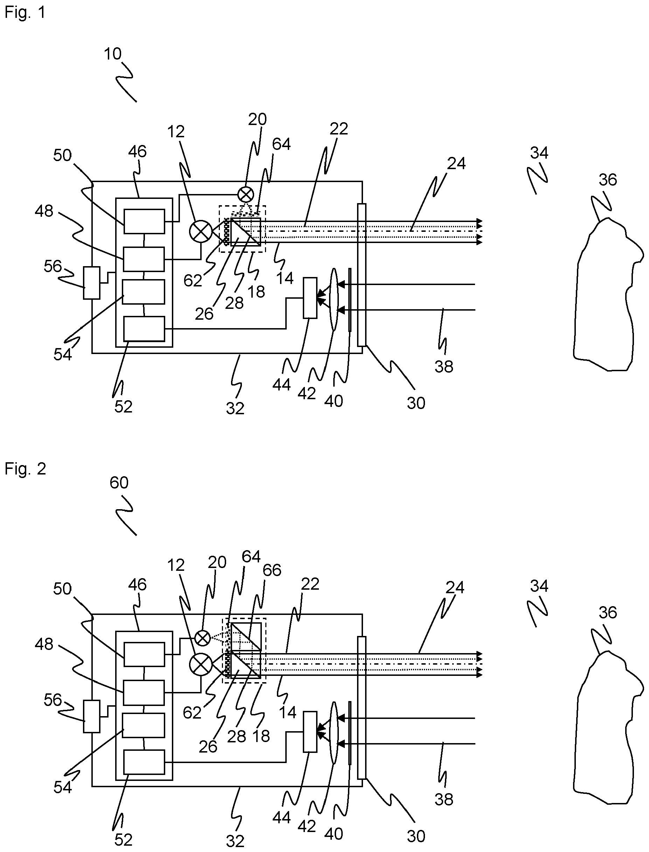

Figur 1 zeigt eine schematische Darstellung einer für das Verständnis der Erfindung nützlichen Ausführungsform einesoptoelektronischen Sensors 10 in einer Ausführungsform als Lichtaster. Der Sensor 10 weist eine Messlichtquelle 12, beispielsweise eine Laserdiode oder einen Oberflächenemitter (vertical-cavity surface-emitting laser (VCSEL)) auf, die wenigstens einen Messlichtstrahl 14 im infraroten Wellenlängenbereich emittiert. Der Sensor 10 weist weiterhin eine Pilotlichtquelle 20, beispielsweise eine Leuchtdiode (LED) auf, die wenigstens einen Pilotlichtstrahl 22 im sichtbaren Wellenlängenbereich emittiert.

Ein optisches Element 18 ist als Strahlvereinigerwürfel 26 mit einem dichroitischen Strahlvereiniger 28 ausgebildet, der den Messlichtstrahl 14 transmittiert und den Pilotlichtstrahl 22 reflektiert. Der Messlichtstrahl 14 und der Pilotlichtstrahl 22 werden so durch das optische Element 18 koaxial überlagert und entlang einer optischen Achse 24 des Sensors 10 durch ein Fenster 30 im Gehäuse 32 des Sensors 10 in einen Überwachungsbereich 34 projiziert.

Das optische Element 18 weist zudem eine erste optische Metaoberfläche 62 und eine zweite optische Metaoberfläche 64 auf, wobei die erste optische Metaoberfläche 62, dazu ausgebildet ist, den Messlichtstrahl14 zu kollimieren, und die zweite optische Metaoberfläche 64, dazu ausgebildet ist, den Pilotlichtstrahl 22 zu kollimieren, so dass der Messlichtstrahl14 und der Pilotlichtstrahl 22 als kollimierte Strahlen auf den dichroitischen Strahlvereiniger 28 treffen.

Die an einem Objekt 36 im Überwachungsbereich 34 remittierten oder reflektierten Messlichtstrahlen werden als Empfangslicht 38 über ein optisches Filter 40 zur Unterdrückung von Störlicht eine Empfangsoptik 42 auf einen Lichtempfänger 44 geleitet.

Der Lichtempfänger 44 ist bevorzugt als Photodiode, APD (Avalanche Photo Diode), oder SPAD (Single-Photon Avalanche Diode), oder SPAD Matrix (SPAD Array) ausgebildet.

In dem Sensor 10 ist weiterhin eine Steuer- und Auswertungseinheit 46 vorgesehen, die mit der Messlichtquelle 12, der Pilotlichtquelle 20 und dem Lichtempfänger 44 verbunden ist. Die Steuer- und Auswerteeinheit 46 umfasst eine Messlichtquellensteuerung 48, eine Pilotlichtquellensteuerung 50, eine Lichtlaufzeitmesseinheit 52, und eine Objektentfernungsschätzeinheit 54, wobei dies zunächst nur funktionale Blöcke sind, die auch in gleicher Hardware oder in anderen funktionalen Einheiten wie in den Lichtquellen 12, 20 oder im Lichtempfänger 44 implementiert sein können. Über eine Schnittstelle 56 kann die Steuer- und Auswertungseinheit 46 Messdaten ausgeben beziehungsweise umgekehrt Steuer- und Parametrieranweisungen entgegennehmen. Die Steuer- und Auswertungseinheit 46 kann auch in Form von lokalen Auswertungsstrukturen auf einem Chip des Lichtempfängers 12 angeordnet sein oder als Teilimplementierung mit den Funktionen einer zentralen Auswertungseinheit (nicht gezeigt) zusammenwirken.

Die Steuer- und Auswertungseinheit 46 kann dazu ausgelegt sein, Pilotlichtquelle 20 und Messlichtquelle 12 unabhängig voneinander zu aktivieren und zu deaktivieren.

Die Figur 2 zeigt eine schematische Darstellung einer alternativen, für das Verständnis der Erfindung nützlichen Ausführungsform eines optoelektronischen Sensors 60. Im Unterschied zu dem in Figur 1 gezeigten Sensor 10 sind die Messlichtquelle 12 und die Pilotlichtquelle 20 so nebeneinander angeordnet, dass der Messlichtstrahl 14 und der Pilotlichtstrahl 22 zunächst parallel zueinander abgestrahlt werden. Das optische Element 18 zum koaxialen Überlagern des Messlichtstrahls 14 und des Pilotlichtstrahls 22 weist daher eine zusätzliche Fläche 66, beispielsweise einen Spiegel, zum Umlenken des Pilotlichtstrahls 22 auf den dichroitischen Strahlvereiniger 28 auf. Die Anordnung von Messlichtquelle 12 und Pilotlichtquelle 20 nebeneinander hat beispielsweise den Vorteil, dass die Lichtquellen auf einer gemeinsamen Leiterplatte montiert werden können. Die Detektion der an dem Objekt 36 im Überwachungsbereich 34 remittierten oder reflektierten Messlichtstrahlen erfolgt wie bei dem in Figur 1 beschriebenen Ausführungsbeispiel.

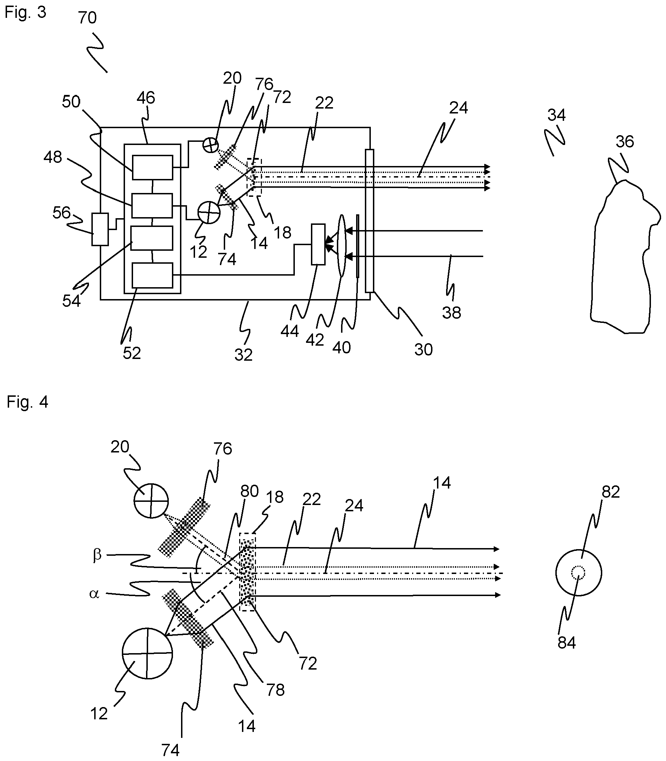

Figur 3 zeigt eine Ausführungsform eines erfindungsgemäßen optoelektronischen Sensors 70 bei dem eine erste optische Metaoberfläche 72 des optischen Elements 18 zum koaxialen Überlagern des Messlichtstrahls 14 und des Pilotlichtstrahls 22 als Strahlvereiniger von Messlichtstrahl 14 und Pilotlichtstrahl 22 ausgebildet ist. Die Funktion der optischen Metaoberfläche 72 wird in der folgenden Figur 4 weiter erläutert. Der Messlichtquelle 14 beziehungsweise der Pilotlichtquelle 20 ist in Lichtstrahlrichtung jeweils eine zweite optische Metaoberfläche 74 beziehungsweise eine dritte optische Metaoberfläche 76 zur Kollimation des Messlichtstrahls 14 beziehungsweise des Pilotlichtstrahls 22 nachgeordnet. Der kollimierte Messlichtstrahl 14 und Pilotlichtstrahl 22 werden durch die Metaoberfläche 72 vereinigt, koaxial überlagert und entlang der optischen Achse 24 des Sensors 70 durch das Fenster 30 des Sensors 70 in den Überwachungsbereich 34 projiziert. Die Detektion der an dem Objekt 36 im Überwachungsbereich 34 remittierten oder reflektierten Messlichtstrahlen erfolgt wie bei dem in Figur 1 beschriebenen optoelektronischen Sensor 10.

Figur 4 zeigt beispielhaft die Funktion der ersten optischen Metaoberfläche 72 des optischen Elements 18 zum koaxialen Überlagern von Messlichtstrahl 14 und Pilotlichtstrahl 22 aus Figur 3. Die Messlichtquelle 12 emittiert einen Messlichtstrahl 14, der von einer zweiten optischen Metaoberfläche 74 durch Aufprägen eines im Wesentlichen parabolischen ersten Phasenprofils kollimiert wird und entlang einer Messlichtstrahlachse 78 unter einem ersten Winkel α in Bezug auf die optische Achse 24 des Sensors 70 auf die erste optische Metaoberfläche 72 trifft. Die Pilotlichtquelle 20 emittiert einen Pilotlichtstrahl 22, der von einer dritten optischen Metaoberfläche 76 durch Aufprägen eines im Wesentlichen parabolischen zweiten Phasenprofils kollimiert wird und entlang einer Pilotlichtstrahlachse 80 unter einem zweiten Winkel β in Bezug auf die optische Achse 24 des Sensors 70 auf die erste optische Metaoberfläche 72 trifft. Die Messlichtstrahlachse 78, die Pilotlichtstrahlachse 80 und die optische Achse 24 des Sensors 70 schneiden sich an der ersten optischen Metaoberfläche 72. Die erste optische Metaoberfläche 72 ist derart ausgebildet, dass sie dem Messlichtstrahl 14 und dem Pilotlichtstrahl 20 jeweils wellenlängenabhängig ein im Wesentlichen keilförmiges Phasenprofil aufprägt, das zu einer Ablenkung von Messlichtstrahl 14 und Pilotlichtstrahl 20 führt, so dass diese nach der ersten optischen Metaoberfläche 72 koaxial entlang der optischen Achse 24 des Sensors 70 in den Überwachungsbereich 34 projiziert werden und dort beim Auftreffen auf ein Objekt einen Messlichtstrahlfleck 82 mit einem konzentrisch dazu angeordneten Pilotlichtstrahlfleck 84 erzeugen.

Die Kollimationsfunktion der zweiten und/oder dritten optischen Metaoberfläche 74, 76 lässt sich auch in die erste optische Metoberfläche 72 integrieren. In dieser Ausführungsform ist die erste optische Metaoberfläche 72 derart ausgebildet, dass sie dem Messlichtstrahl 14 und dem Pilotlichtstrahl 20 jeweils ein wellenlängenabhängiges parabolisches und/oder keilförmiges Phasenprofil aufprägen kann.

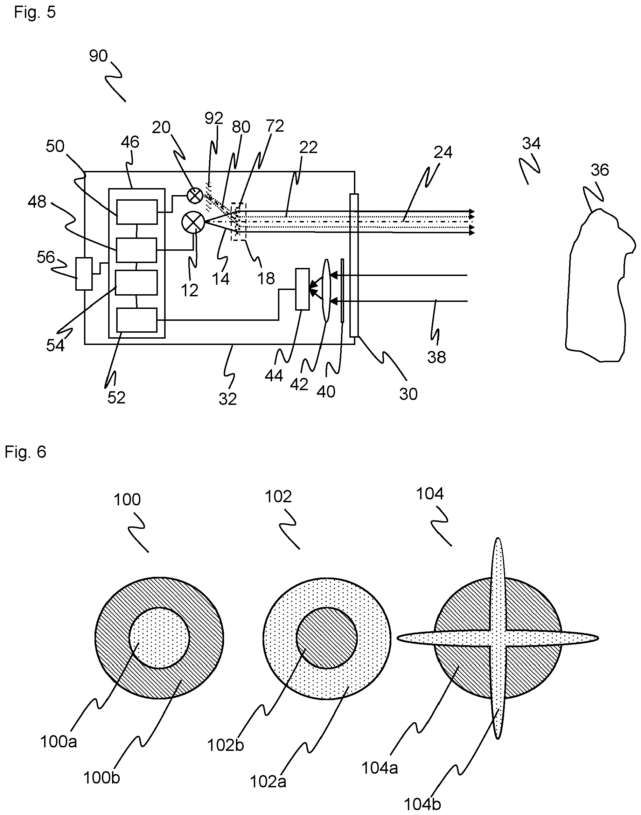

In dem in der Figur 5 gezeigten, beispielhaften Sensor 90 wird dem Messlichtstrahl 14 durch die erste optische Metaoberfläche 72 ein im Wesentlichen parabolisches Phasenprofil aufgeprägt und der Messlichtstrahl 14 kollimiert. Da der Messlichtstrahl 14 von der Messlichtquelle 12 bereits entlang der optischen Achse 24 des Sensors 90 emittiert wird, ist keine Umlenkung des Messlichtstrahls 14 nötig, so dass dem Messlichtstrahl 14 kein keilförmiges Phasenprofil aufgeprägt werden muss. Der von der Pilotlichtquelle 20 zunächst parallel zur optischen Achse 24 des Sensors 90 emittierte Pilotlichtstrahl 22 wird durch ein optisches Umlenkelement 92, beispielsweise einem Spiegel, einem Prisma oder einer weiteren optischen Metaoberfläche in Richtung der ersten optischen Metaoberfläche 72 umgelenkt, so dass er entlang einer Pilotlichtstrahlachse 80 unter einem zweiten Winkel β in Bezug auf die optische Achse 24 des Sensors 90 auf die erste optische Metaoberfläche 72 trifft. Die Pilotlichtstrahlachse 80 und die optische Achse 24 des Sensors 90 schneiden sich an der ersten optischen Metaoberfläche 72. Die erste optische Metaoberfläche 72 ist derart ausgebildet, dass sie dem Pilotlichtstrahl 20 ein im Wesentlichen keilförmiges und parabolisches Phasenprofil aufprägt, so dass der Pilotlichtstrahl 20 kollimiert und abgelenkt wird. Dadurch werden Messlichtstrahl 14 und Pilotlichtstrahl 20 nach der ersten optische Metaoberfläche 72 koaxial entlang der optischen Achse 24 des Sensors 90 in den Überwachungsbereich 34 projiziert. Die Detektion der an dem Objekt 36 im Überwachungsbereich 34 remittierten oder reflektierten Messlichtstrahlen erfolgt wieder wie beim in Figur 1 beschriebenen Ausführungsbeispiel.

Figur 6 zeigt beispielhafte Lichtflecken 100, 102, 104 von Messlichtstrahlen und Pilotlichtstrahlen beim Auftreffen auf ein Objekt im Überwachungsbereich. Im ersten beispielhaften Lichtfleck 100 ist der Pilotlichtstrahlfleck 100b konzentrisch im Messlichtstrahlfleck 100a angeordnet, im zweiten beispielhaften Lichtfleck 102 ist der Pilotlichtstrahlfleck 92b ausgebildet und konzentrisch um den Messlichtstrahlfleck 92a angeordnet. Der dritte beispielhafte Lichtfleck 104 zeigt einen kreuzförmigen Pilotlichtstrahlfleck 104b der mittig über einem kreisförmigen Messlichtstrahlfleck 104a angeordnet ist. Es versteht sich, dass die Darstellungen rein beispielhaft sind, insbesondere werden die im Überwachungsbereich erzeugten Lichtstrahlflecken in der Regel nicht scharf begrenzt sein.

Die Form der Lichtflecken 100, 102 kann beispielsweise durch eine entsprechende Einstellung der Strahldurchmesser der Messlichtstrahlen und der Pilotlichtstrahlen erfolgen. Ein kreuzförmiger Pilotlichtstrahlfleck 104b kann durch aus dem Stand der Technik bekannte diffraktive Elemente zur Strahlformung, oder eine weitere, zu einer entsprechenden Stahlformung ausgebildete optische Metaoberfläche erzeugt werden.

## Patentansprüche

1. Optoelektronischer Sensor (70, 90) mit wenigstens einer Messlichtquelle (12) zum Aussenden von wenigstens einem Messlichtstrahl (14) im infraroten Wellenlängenbereich in einen Überwachungsbereich (34), wenigstens einer Pilotlichtquelle (20) zum Aussenden von wenigstens einem Pilotlichtstrahl (22) im sichtbaren Wellenlängenbereich in den Überwachungsbereich (34), einem optischen Element (18) zum koaxialen Überlagern des Messlichtstrahls (14) und des Pilotlichtstrahls (22), einem Lichtempfänger (44) zum Empfangen von aus dem Überwachungsbereich (34) remittierten oder reflektierten Messlichtstrahlen (38) und Erzeugen entsprechender Empfangssignale, einer Steuer- und Auswerteeinheit (46) zur Ansteuerung des Lichtempfängers (44), der Messlichtquelle (12) und/oder der Pilotlichtquelle (20) und zur Auswertung der Empfangssignale, wobei das optische Element (18) zum koaxialen Überlagern des Messlichtstrahls (14) und des Pilotlichtstrahls (22) wenigstens eine erste optische Metaoberfläche (72) aufweist, die zum koaxialen Überlagern des Messlichtstrahls (14) und des Pilotlichtstrahls (22) ausgebildet ist
**dadurch gekennzeichnet, dass**
der Messlichtquelle (12) in Lichtstrahlrichtung eine zweite optische Metaoberfläche (74) zum Einstellen eines Öffnungswinkels des Messlichtstrahls (14), insbesondere zur Kollimation des Messlichtstrahls (14), und der Pilotlichtquelle (20) in Lichtstrahlrichtung eine dritte optische Metaoberfläche (76) zum Einstellen eines Öffnungswinkels des Pilotlichtstrahls (22), insbesondere zur Kollimation des Pilotlichtstrahls (22), nachgeordnet ist, oder
die erste optische Metaoberfläche (72) zum Einstellen des Öffnungswinkels des Messlichtstrahls (14), insbesondere zur Kollimation des Messlichtstrahls (14) und zum Einstellen des Öffnungswinkels des Pilotlichtstrahls (22), insbesondere zur Kollimation des Pilotlichtstrahls (22) ausgebildet ist.

2. Optoelektronischer Sensor (70, 90) nach Anspruch 1, wobei der Messlichtstrahl (14) unter einem ersten Winkel (α) und der Pilotlichtstrahl (22) unter einem zweiten Winkel (β) in Bezug auf eine optische Achse (24) des Sensors (70, 90) auf die erste optische Metaoberfläche (72) auftreffen, wobei sich Beträge und/oder Richtungen des ersten Winkels (α) und des zweiten Winkels (β) unterscheiden.

3. Optoelektronischer Sensor (10, 60, 70, 90) nach einem der vorhergehenden Ansprüche, wobei die Pilotlichtquelle (20) wenigstens einen Pilotlichtstrahl (22) im Wellenlängenbereich von 490 - 640 nm aussendet.

## Claims

1. Optoelectronic sensor (70, 90) having at least one measuring light source (12) for emitting at least one measuring light beam (14) in the infrared wavelength range into a monitoring range (34), at least one pilot light source (20) for emitting at least one pilot light beam (22) in the visible wavelength range into the monitoring range (34), an optical element (18) for coaxially superimposing the measuring light beam (14) and the pilot light beam (22), a light receiver (44) for receiving measuring light beams (38) emitted or reflected from the monitoring area (34) and generating corresponding received signals, a control and evaluation unit (46) for controlling the light receiver (44), the measuring light source (12) and/or the pilot light source (20) and for evaluating the received signals, wherein the optical element (18) for coaxial superimposition of the measuring light beam (14) and the pilot light beam (22) has at least one first optical metasurface (72) which is designed for coaxial superimposition of the measuring light beam (14) and the pilot light beam (22) **characterized in that**
a second optical metasurface (74) is arranged downstream of the measuring light source (12) in the direction of the light beam for adjusting an opening angle of the measuring light beam (14), in particular for collimating the measuring light beam (14), and a third optical metasurface (76) is arranged downstream of the pilot light source (20) in the direction of the light beam for adjusting an opening angle of the pilot light beam (22), in particular for collimating the pilot light beam (22), or
the first optical metasurface (72) is designed for adjusting the opening angle of the measuring light beam (14), in particular for collimating the measuring light beam (14), and for adjusting the opening angle of the pilot light beam (22), in particular for collimating the pilot light beam (22).

2. Optoelectronic sensor (70, 90) according to claim 1, wherein the measuring light beam (14) impinges on the first optical metasurface (72) at a first angle (α) and the pilot light beam (22) at a second angle (β) with respect to an optical axis (24) of the sensor (70, 90), wherein amounts and/or directions of the first angle (α) and the second angle (β) differ.

3. Optoelectronic sensor (10, 60, 70, 90) according to one of the preceding claims, wherein the pilot light source (20) emits at least one pilot light beam (22) in the wavelength range of 490 - 640 nm.

## Revendications

1. Capteur optoélectronique (70, 90) comprenant au moins une source de lumière de mesure (12) pour émettre au moins un faisceau de lumière de mesure (14) dans la zone de longueur d'onde infrarouge dans une zone de surveillance (34), au moins une source de lumière pilote (20) pour émettre au moins un faisceau de lumière pilote (22) dans la zone de longueur d'onde visible dans la zone de surveillance (34), un élément optique (18) pour superposer coaxialement le faisceau de lumière de mesure (14) et le faisceau de lumière pilote (22), un récepteur de lumière (44) pour recevoir les faisceaux de lumière de mesure (38) réémis ou réfléchis par la zone de surveillance (34) et générer les signaux de réception correspondants, une unité de commande et d'évaluation (46) pour commander le récepteur de lumière (44), la source de lumière de mesure (12) et/ou la source de lumière pilote (20) et pour évaluer les signaux de réception, dans laquelle l'élément optique (18) pour la superposition coaxiale du faisceau de lumière de mesure (14) et du faisceau de lumière pilote (22) comprend au moins une première méta-surface optique (72) qui est conçue pour la superposition coaxiale du faisceau de lumière de mesure (14) et du faisceau de lumière pilote (22).
**caractérisé en ce que**
une deuxième méta-surface optique (74) est disposée en aval de la source de lumière de mesure (12) dans la direction du faisceau de lumière pour régler un angle d'ouverture du faisceau de lumière de mesure (14), en particulier pour collimater le faisceau de lumière de mesure (14), et une troisième méta-surface optique (76) est disposée en aval de la source de lumière pilote (20) dans la direction du faisceau de lumière pour régler un angle d'ouverture du faisceau de lumière pilote (22), en particulier pour collimater le faisceau de lumière pilote (22), ou
la première méta-surface optique (72) est conçue pour régler l'angle d'ouverture du faisceau de lumière de mesure (14), en particulier pour collimater le faisceau de lumière de mesure (14), et pour régler l'angle d'ouverture du faisceau de lumière pilote (22), en particulier pour collimater le faisceau de lumière pilote (22).

2. Capteur optoélectronique (70, 90) selon la revendication 1, dans lequel le faisceau de lumière de mesure (14) atteint la première méta-surface optique (72) à un premier angle (α) et le faisceau de lumière pilote (22) à un deuxième angle (β) par rapport à un axe optique (24) du capteur (70, 90), dans lequel les valeurs et/ou les directions du premier angle (α) et du deuxième angle (β) diffèrent.

3. Capteur optoélectronique (10, 60, 70, 90) selon l'une des revendications précédentes, dans lequel la source de lumière pilote (20) émet au moins un faisceau de lumière pilote (22) dans la zone de longueur d'onde de 490 à 640 nm.
